# EUROPÄISCHE PATENTSCHRIFT

(11) **EP 3 452 728 B1**
(45) Veröffentlichungstag und Bekanntmachung des Hinweises auf die Patenterteilung: **16.03.2022**
(21) Anmeldenummer: 17723289.9
(22) Anmeldetag: 25.04.2017
(51) Int. Cl.: F04D 29/12

(54) **KREISELPUMPE MIT EINER ANORDNUNG ZUR ABDICHTUNG**
CENTRIFUGAL PUMP HAVING AN ARRANGEMENT FOR SEALING
POMPE CENTRIFUGE ÉQUIPÉE D'UN SYSTÈME D'ÉTANCHÉIFICATION

(30) Priorität: 04.05.2016 DE 102016207775
(43) Veröffentlichungstag der Anmeldung: 13.03.2019
(73) Patentinhaber: KSB SE & Co. KGaA, 67227 Frankenthal (DE)
(72) Erfinder: BÖHM, Alexander, 67227 Frankenthal (DE); BRAUN, Stephan, 67227 Frankenthal (DE); BROSS, Stephan, 67227 Frankenthal (DE); RAUNER, Holger, 67227 Frankenthal (DE); STEIN, Adrian, 67227 Frankenthal (DE); RICHTER, Tim, 53819 Neunkirchen-Seelscheid (DE)
(86) Internationale Anmeldenummer: PCT/EP2017/059812
(87) Internationale Veröffentlichungsnummer: WO 2017/190990

(56) Entgegenhaltungen:
- WO-A1-2015/035625
- FR-A- 1 527 552
- FR-A1- 2 594 184
- US-A1- 2007 160 467
- US-B2- 7 484 734

## Beschreibung

Die Erfindung betrifft eine Kreiselpumpe mit einer Anordnung zur Abdichtung, wobei zwischen einem rotierenden Element und einem nicht rotierenden Element ein Spalt gebildet wird.

Bei einer solchen Anordnung kann es sich beispielsweise um eine Spaltringdichtungsanordnung handeln. Spaltringdichtungen dienen in Kreiselpumpen zur Abdichtung von Räumen unterschiedlicher Drücke, wobei in einer Trennwand zwischen den Räumen ein rotierendes Element angeordnet ist. Bei dem rotierenden Element kann es sich um eine Welle, eine Nabe eines Laufrades, einen Saugmund eines Laufrades oder dergleichen handeln. Die Anordnung umfasst ein nicht rotierendes Element und ein rotierendes Element. Bei dem nicht rotierenden Element kann es sich beispielsweise um einen Spaltring handeln, der am Gehäuse angeordnet ist, oder um das Gehäuse selbst bzw. um ein Gehäuseteil. Bei dem rotierenden Element kann es sich beispielsweise um einen Laufring handeln, der auf dem Laufrad angeordnet ist, oder um das Laufrad selbst bzw. einen Teil des Laufrades, beispielsweise bei einem geschlossenen Laufrad die Deckscheibe des Laufrades. Der Spalt, der zwischen dem rotierenden Element und dem nicht rotierenden Element gebildet wird, wirkt als Drossel zwischen den Räumen unterschiedlicher Drücke und verhindert einen zu hohen Strom vom Raum höheren Druckes in den Raum niedrigeren Druckes. Je kleiner der Spalt zwischen den beiden Elementen ist, desto geringer sind die Wirkungsgradverluste der Kreiselpumpe. Diesem Bestreben steht jedoch entgegen, dass ein zu kleiner Spalt sehr schwierig in Einklang mit den Fertigungstoleranzen sowie den betrieblichen Einflüssen zu bringen ist. Es gilt, Berührungen zwischen den Elementen zu vermeiden, um ein Anstreifen des rotierenden Elements an dem nicht rotierenden Element zu verhindern und somit um Verschleiß vorzubeugen. Aufgrund der notwendigen Toleranzen bei der Herstellung der einzelnen Komponenten gibt es eine Mindestspaltweite, die gerade verhindert, dass Elemente sich berühren und somit Verreibung und Verschleiß entsteht. Es treten jedoch im Betrieb insbesondere beim Anfahren bzw. Abfahren der Pumpe immer wieder Situationen auf, in denen es zur Berührung kommt und dann ein Pressen bzw. Materialverschleiß auftritt.

Die EP 2 466 149 A1 beschreibt eine Strömungsmaschine für ein Fluid mit einem radialen Dichtspalt, der zwischen Statorteilen und einem geschlossenen Laufrad ausgebildet ist. Am Dichtspalt ist ein stationär angeordneter Verschleißring vorgesehen mit einer dem Laufrad der Strömungsmaschine zugewandten Innenseite, einer Außenseite und zwei axial beabstandeten seitlichen Oberflächen. Im Verschleißring ist eine konzentrisch verlaufende Vertiefung in Form eines radialen Spaltes oder eines radialen Einschnittes ausgebildet.

Die FR 1 527 552 A zeigt eine Schwimmringdichtung, die sich unter Einfluss eines Sperrmediums in axialer Richtung dichtend an ein Gehäuse anlegt.

In der DE 35 30 986 A1 wird eine Spaltringdichtung für eine Kreiselpumpe mit einem im Gehäuse befestigten Spaltring beschrieben. Zwischen der Dichtfläche des Spaltringes und dem Gehäuse sind mehrere elastische Elemente angeordnet. Durch diese sollen Beschädigungen des rotierenden Teiles weitgehend ausgeschlossen werden.

Die EP 681658 B1 beschreibt eine Kreiselpumpe mit einer Spaltringdichtung, bestehend aus einem in einem stillstehenden Gehäuseteil verdrehsichernd angeordnetem Spaltring. Innerhalb des Spaltrings befindet sich ein rotierendes Bauteil. Zwischen dem Spaltring und dem innerhalb desselben rotierenden Bauteils ist ein Spalt ausgebildet. Beiderseits des Spalts sind Räume unterschiedlichen Druckes vorhanden. Die dem rotierenden Teil zugekehrte Fläche des Spaltrings ist als stillstehende polygonale Spaltringfläche ausgebildet.

Die DE 35 13 116 A1 beschreibt eine verschleißbehaftete Ringdichtung, die nachstellbar ist. Hierdurch lässt sich die Standzeit einer Kreiselpumpe trotz Verschleiß erhöhen.

Aufgabe der Erfindung ist es, eine Kreiselpumpe mit einer Anordnung zur Abdichtung anzugeben, bei der zwischen einem rotierenden Element und einem nicht rotierenden Element ein möglichst kleiner Spalt gebildet wird, sodass die Pumpe einen möglichst hohen Wirkungsgrad aufweist und der Verluststrom durch den Spalt möglichst gering wird und gleichzeitig Verschleißerscheinungen zwischen den Elementen verhindert werden. Die Kreiselpumpe soll sich durch eine hohe Lebensdauer und möglichst geringem Wartungsaufwand auszeichnen. Weiterhin soll die Kreiselpumpe möglichst preiswert herzustellen sein und eine zuverlässige Betriebsweise gewährleisten.

Diese Aufgabe wird erfindungsgemäß durch eine Kreiselpumpe mit den Merkmalen des Anspruchs 1 und ein Verfahren mit den Merkmalen des Anspruchs 10 gelöst. Bevorzugte Varianten sind den Unteransprüchen, der Beschreibung und den Zeichnungen zu entnehmen.

Erfindungsgemäß weist zumindest ein Element der Anordnung Körper auf, die drehbar gelagert sind. Die Körper können entweder so gelagert sein, dass sie um eine Achse oder mehrere Achsen rotieren können oder wie bei der Kugel eines Kugelschreibers in beliebige Richtungen verdrehbar sind. Die Körper können entweder an dem nicht rotierenden Element angeordnet sein oder an dem rotierenden Element. Prinzipiell besteht auch die Möglichkeit, dass Körper sowohl an dem rotierenden als auch an dem nicht rotierenden Element angeordnet sind.

Als besonders günstig erweist es sich, wenn die Anordnung zur Dichtung als Spaltringdichtungsanordnung ausgeführt ist und die Körper an dem nicht rotierenden Element angeordnet sind, der als Spaltring ausgebildet ist. Alternativ hierzu besteht auch die Möglichkeit, dass bei der Spaltringdichtungsanordnung das nicht rotierende Element von dem Gehäuse selbst gebildet wird, ohne dass ein separater Spaltring am Gehäuse festgelegt wird und die Körper rotierbar am Gehäuse gelagert sind in einer dazu speziell ausgebildeten Struktur.

Ist die Anordnung als Spaltringdichtungsanordnung gebildet, so kann das rotierende Element von einem Laufring gebildet werden, der auf der Deckscheibe eines Laufrades angeordnet ist. Alternativ kann auch hier das rotierende Element von dem Laufrad selbst gebildet werden, wobei die drehbar gelagerten Körper beispielsweise in der Deckscheibe des Laufrades verdrehbar gelagert sind, wobei in diesem Fall die Deckscheibe des Laufrades mit einer Struktur versehen ist, welche eine Lagerung für die Körper bildet.

Die Körper sind jeweils spaltseitig angeordnet, sodass sie bei einer Spaltverkleinerung, wie sie beispielsweise beim Anfahren oder Abfahren der Kreiselpumpe auftreten kann, ein Andriven der Elemente durch Abrollbewegung der Körper verhindern kann und somit Verschleißerscheinungen wirksam vorgebeugt werden können.

Die erfindungsgemäße Vorrichtung ermöglicht es, möglichst geringe Spaltweiten einzustellen, sodass die Kreiselpumpe einen geringen Leckagestrom durch den Spalt aufweist und somit hohe Wirkungsgrade besitzt und gleichzeitig Verschleißerscheinungen wirksam verhindert werden, da die drehbar gelagerten Körper Reibungskräfte zuverlässig fangen und in Drehbewegungen umwandeln.

Erfindungsgemäß sind die Körper in einer Struktur formschlüssig umfasst, sodass sie einerseits in einem Raum festgelegt sind und gleichzeitig eine Verdrehung der Körper um sich selbst bzw. um eine oder mehrere Achsen möglich ist, wie dies beispielsweise bei der Kugel eines Kugelschreibers der Fall ist. Bei der Struktur kann es sich um ein separates Bauteil handeln, das Teil des Elementes ist oder die Struktur kann von dem Element selbst gebildet werden, also beispielsweise von dem Spaltring bzw. Laufring oder von dem Gehäuseteil bzw. Laufrad. Durch das formschlüssige Umfassen werden die Körper teilweise umschlossen, sodass ein Teil des Körpers zum Spalt hin über die Struktur hinausragt und ein Teil des Körpers in einem Raum angeordnet ist, der von der Struktur gebildet wird und auf diese Weise verhindert wird, dass die Körper aus der Struktur herausfallen können.

Die Körper können beispielsweise als Kugeln ausgebildet sein. Dabei erweist es sich als vorteilhaft, wenn diese um einen Punkt in beliebige Richtungen rotierbar gelagert sind.

Ergänzend oder alternativ kann die Anordnung auch Körper umfassen, die als Zylinder ausgebildet sind. Vorzugsweise sind die Zylinder um eine Achse drehbar gelagert, wobei ein spaltseitiges Abrollen über die Mantelflächen der Zylinder erfolgt, die zumindest teilweise in den Spalt hineinragen und auf diese Weise ein Anstreifen der Elemente wirksam verhindern, sodass Verschleißerscheinungen vorgebeugt wird.

Bei einer Variante der Erfindung sind die Körper über Stifte miteinander verbunden. So können beispielsweise in einer Reihe hintereinander mehrere Zylinder angeordnet sein, die jeweils über Stifte verbunden sind. Die Stifte gehören zur Drehachse um welche die Zylinder rotieren.

Die Struktur, in welche die Körper eingebettet sind, können Waben und/oder Zellen umfassen, welche Hohlräume bilden zur Aufnahme der Körper. Bei einer Variante der Erfindung können auch einzelne Zellen bzw. Waben nicht mit Körpern versehen werden, sodass das Element Waben bzw. Zellen aufweist, die einer Spaltverlustminimierung dienen. Die Zellen oder Waben führen zu günstigen Strömungsverhältnissen im Spalt, sodass eine Spaltverlustminimierung erreicht wird.

Bei einer Variante der Erfindung sind die Körper so gelagert, dass sie das Element sowohl zu einer Innenseite als auch zu einer Außenseite stützend lagern. Beispielsweise kann dazu das Element als Hohlzylinder ausgebildet sein und eine Struktur aufweisen, die Hohlräume umfasst, in denen die Körper so angeordnet sind, dass sie zur inneren Mantelfläche des Zylinders als auch zur äußeren Mantelfläche des Zylinders hinausragen und auf diese Weise das Element sowohl zu seiner Innenseite als auch zu seiner Außenseite durch die Drehbewegungen der Körper abstützend lagern können.

Bei einer besonders günstigen Variante der Erfindung sind das jeweilige Element und die darin gelagerten Körper aus dem gleichen Werkstoff ausgebildet. Dabei erweist es sich als vorteilhaft, wenn das Element und die Körper gemeinsam in einem generativen Verfahren hergestellt sind. Solche generativen Fertigungsverfahren werden auch als additive Fertigungsverfahren bezeichnet. Beispielsweise kann dazu ein selektives Laserschmelzen und/oder ein selektives Lasersintern zum Einsatz kommen.

Dabei kann das Element mit darin angeordneten Körpern nach einem Verfahren hergestellt werden, bei dem zunächst eine Schicht eines Aufbaumaterials auf eine Unterlage aufgebracht wird. Vorzugsweise handelt es sich bei dem Aufbaumaterial zur Herstellung des Elements um metallische Pulverteilchen. Bei einer Variante der Erfindung werden dazu eisenhaltige und/oder kobalthaltige Pulverpartikel eingesetzt. Diese können Zusätze wie Chrom, Molybdän oder Nickel enthalten. Der metallische Aufbauwerkstoff wird in Pulverform in einer dünnen Schicht auf eine Platte aufgebracht. Dann wird der pulverförmige Werkstoff mittels einer Strahlung an den jeweils gewünschten Stellen lokal vollständig umgeschmolzen und es bildet sich nach der Erstarrung eine feste Materialschicht. Anschließend wird die Unterlage um den Betrag einer Schichtdicke abgesenkt und es wird erneut Pulver aufgetragen. Dieser Zyklus wird solange wiederholt bis alle Schichten umgeschmolzen sind und das fertige Element mit den darin drehbar gelagerten Körpern entstanden ist. Erfindungsgemäß wird dabei eine Struktur erzeugt, welche die Körper formschlüssig umschließt, sodass ein Teil der Körper in den Dichtspalt hineinragt und ein Teil der Körper in einer Hohlraumstruktur angeordnet ist, sodass diese nicht aus dem Element herausfallen können.

Als Strahlung kann beispielsweise ein Laserstrahl zum Einsatz kommen, welcher das Element aus den einzelnen Pulverschichten generiert. Die Daten zur Führung des Laserstrahls werden auf der Grundlage eines 3D-CAD-Körpers mittels einer Software erzeugt. Alternativ zu einem selektiven Laserschmelzen kann auch ein Elektronenstrahl (EBM) zum Einsatz kommen.

Das auf diese Weise generierte Element mit den darin angeordneten Körpern bildet eine Anordnung zur Abdichtung einer Kreiselpumpe, die besonders verschleißarm ist und in der sehr geringe Spaltmaße in Kauf genommen werden können, ohne dass es zu einem Verschleiß kommt.

Weitere Merkmale und Vorteile der Erfindung ergeben sich aus der Beschreibung von Ausführungsbeispielen anhand von Zeichnungen und aus den Zeichnungen selbst.

Dabei zeigt:
- Figur 1: eine Schnittdarstellung durch eine Kreiselpumpe,
- Figur 2: eine schematische Darstellung einer Anordnung zur Abdichtung,
- Figur 3: eine Variante mit zylinderförmigen Körpern,
- Figur 4: eine Variante, bei der die Körper miteinander verbunden sind,
- Figur 5: eine Variante, bei der die Körper sowohl innen als auch außen eine Lauffläche aufweisen,
- Figur 6: eine schematische Darstellung einer Erzeugung der Anordnung mit einem generativen Verfahren.

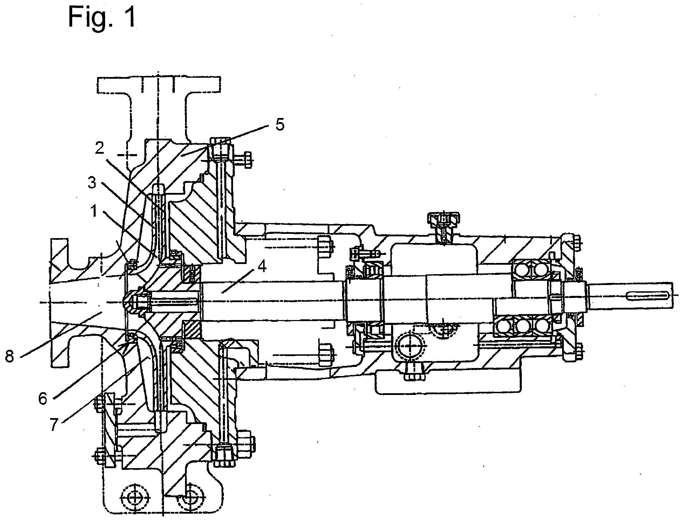

Figur 1 zeigt eine Kreiselpumpe mit einem Laufrad 1. Das Laufrad 1 ist als geschlossenes Radiallaufrad ausgebildet und weist eine Tragscheibe 2 sowie eine Deckscheibe 3 auf. Auf der Tragscheibe 2 sind Schaufeln angeordnet. Zwischen der Tragscheibe 2 und der Deckscheibe 3 werden Passagen zum Fördern des Mediums gebildet. Das Laufrad 1 wird von einer Welle 4 angetrieben und ist von einem Gehäuse 5 umgeben.

Die Kreiselpumpe weist eine Anordnung 6 zur Abdichtung auf, die einen Raum 7 mit einem höheren Druck von einem Raum 8 mit einem niedrigeren Druck trennt. Der Raum 7 wird im Ausführungsbeispiel vom zweiten Raum des Laufrades 1 gebildet. Der Raum 8 bildet die Saugseite der Kreiselpumpe. Bei der Anordnung 6 handelt es sich im Ausführungsbeispiel um eine Spaltringdichtungsanordnung, die einen radialen Dichtspalt aufweist.

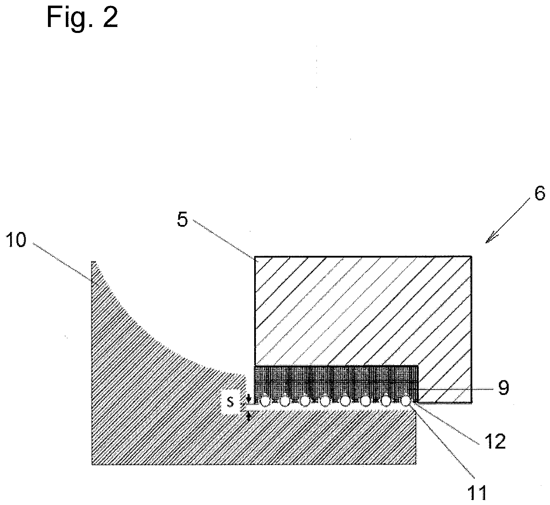

Figur 2 zeigt eine schematische Darstellung einer Anordnung 6 zur Abdichtung. Die Anordnung weist ein nicht rotierendes Element 9 auf, das in der Darstellung gemäß Figur 2 von einem Spaltring gebildet wird, der am Gehäuse 5 angeordnet ist. Alternativ zu der Darstellung gemäß Figur 2 kann das nicht rotierende Element 9 auch von dem Gehäuse 5 selbst gebildet werden. Weiterhin weist die Anordnung 6 ein rotierendes Element 10 auf. Das rotierende Element 10 wird im Ausführungsbeispiel gemäß Figur 2 von der Deckscheibe des Laufrades, also vom Laufrad selbst, gebildet. Alternativ zu der Darstellung gemäß Figur 2 kann auch auf der Deckscheibe des Laufrades ein Laufring angeordnet sein. Zwischen dem nicht rotierenden Element 9 und dem rotierenden Element 10 wird ein Spalt S gebildet. Bei dem Spalt S handelt es sich um einen radialen Dichtspalt. Um einen Fluidstrom von dem Raum mit dem höheren Druck zu dem Raum mit dem niedrigeren Druck möglichst klein zu halten, sollte dieser Spalt S möglichst klein sein.

Erfindungsgemäß weist die Anordnung 6 Körper 11 auf, die im Ausführungsbeispiel gemäß Figur 2 an dem nicht rotierenden Element 9 angeordnet sind. Dazu verfügt das nicht rotierende Element 9 über eine Struktur 12, in welcher die Körper 11 rotierbar gelagert sind.

Die Struktur 12 ist so beschaffen, dass die Körper 11 dort formschlüssig eingebettet sind, sodass ein Teil der Körper 11 in einem von der Struktur 12 gebildeten Hohlraum angeordnet ist und ein Teil der Körper 11 zum Spalt S hinausragt. Die Körper 11 verhindern durch Abrollbewegungen des nicht rotierenden Elements 9 am rotierenden Element 10, dass es zu Verschleißerscheinungen zwischen beiden Elementen 9, 10 kommt. Im Ausführungsbeispiel gemäß Figur 2 sind die Körper 11 als bewegliche Kugeln ausgebildet.

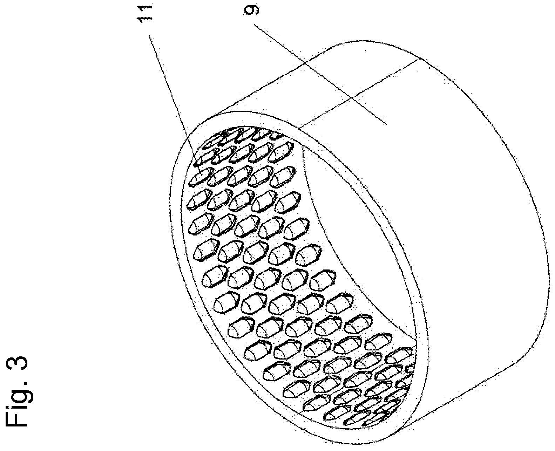

Figur 3 zeigt eine Variante, bei der die Körper als bewegliche Rollen ausgebildet sind. Gemäß der Darstellung in Figur 3 sind die Körper 11 in einem als Spaltring ausgebildeten nicht rotierenden Element 9 angeordnet, das eine Struktur aufweist, die Hohlräume bildet, sodass die Körper in den Hohlräumen formschlüssig umfasst sind und gleichzeitig ein Teil der Körper in den Spalt ragt und somit eine Abrollbewegung der Körper ermöglicht. Im Ausführungsbeispiel gemäß Figur 3 weisen die Körper einen zylindrischen Abschnitt auf und rollen entlang ihrer Mantelfläche ab. Die als Rollen ausgebildeten Körper drehen sich um eine Achse. Einzelne Plätze können anstelle der Rollen eine Waben- bzw. Zellenstruktur aufweisen, die einer Spaltverlustverminderung dient.

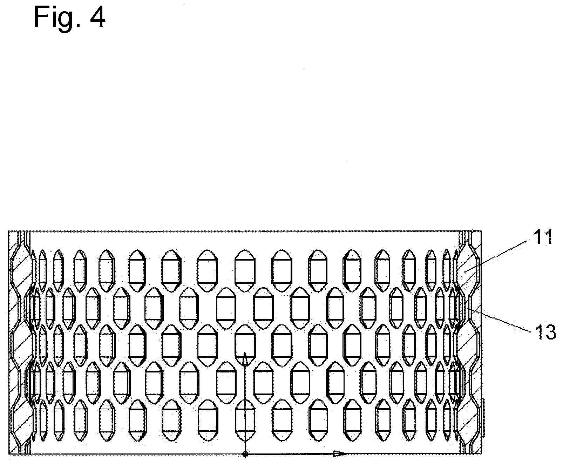

Figur 4 zeigt eine Variante, bei der die beweglichen Rollen über Stifte 13 miteinander verbunden sind. Somit sind mehrere als Rollen ausgebildete Körper über die Stifte 13 drehfest miteinander verbunden. Die Stifte 13 sind ebenfalls in Hohlräumen der Struktur 12 angeordnet.

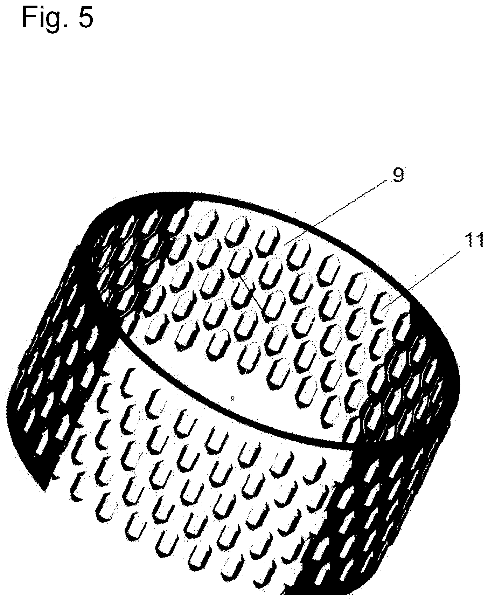

Figur 5 zeigt ein Ausführungsbeispiel, bei welchem die Körper sowohl innen als auch außen eine Lauffläche aufweisen. Auch bei der Darstellung gemäß Figur 5 sind die Körper 11 in einem als Spaltring ausgebildeten nicht rotierenden Element 9 angeordnet, wobei die Struktur so gewählt wird, dass die Körper formschlüssig umschlossen werden, aber sowohl zur inneren Mantelfläche als auch zur äußeren Mantelfläche des Spaltringes hinausragen.

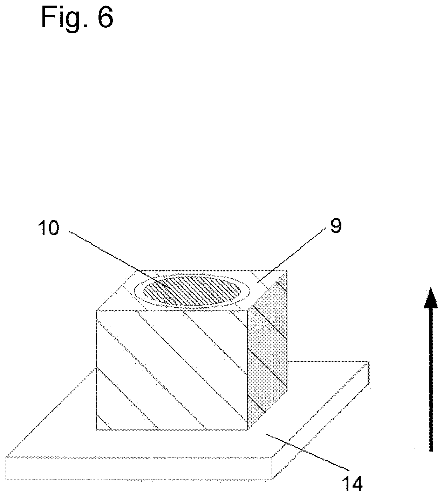

Figur 6 zeigt eine schematische Darstellung eines Aufbaus für ein Verfahren zur Herstellung einer Anordnung zur Abdichtung in einer Kreiselpumpe. Auf einer Unterlage 14 wird ein Aufbaumaterial in Form eines metallischen Pulvers aufgebracht. Der pulverförmige Werkstoff wird mittels Strahlung an den jeweiligen gewünschten Stellen lokal vollständig umgeschmolzen und bildet nach der Erstarrung eine feste Materialschicht. Anschließend wird die Unterlage 14 um den Betrag einer Schichtdicke abgesenkt und es wird erneut Pulver aufgetragen. Dieser Zyklus wird solange wiederholt bis alle Schichten umgeschmolzen sind. Auf diese Weise ist es möglich, in einem generativen Verfahren sowohl das nicht rotierende Element 9 als auch das rotierende Element 10 auszubilden, wobei erfindungsgemäß zumindest ein Element Körper 11 aufweist, die beweglich gelagert sind.

## Patentansprüche

1. Kreiselpumpe mit einer Anordnung (6) zur Abdichtung, wobei zwischen einem rotierenden Element (10) und einem nicht rotierenden Element (9) ein Spalt (S) gebildet wird, wobei zumindest ein Element (9, 10) Körper (11) aufweist, die beweglich gelagert sind, wobei die Körper (11) spaltseitig angeordnet sind, wobei die Körper (11) eine Mantelfläche zum Abrollen aufweisen, wobei bei einer Spaltverkleinerung, wie sie beispielsweise beim Anfahren oder Abfahren einer Kreiselpumpe auftreten kann, eine Verschleißerscheinung der Elemente (9, 10) durch eine Abrollbewegung der Körper (11) verhinderbar ist, **dadurch gekennzeichnet, dass** die Körper (11) in einer Struktur (12) formschlüssig eingebettet sind, wobei die Struktur Hohlräume bildet, sodass die Körper (11) in den Hohlräumen formschlüssig umfasst sind und gleichzeitig ein Teil der Körper (11) in den Spalt (S) ragt und somit eine Abrollbewegung der Körper ermöglicht.

2. Kreiselpumpe nach Anspruch 1, **dadurch gekennzeichnet, dass** die Körper (11) als Kugeln ausgebildet sind.

3. Kreiselpumpe nach Anspruch 1, **dadurch gekennzeichnet, dass** die Körper (11) einen zylindrischen Abschnitt aufweisen.

4. Kreiselpumpe nach einem der Ansprüche 1 bis 3, **dadurch gekennzeichnet, dass** die Körper (11) an dem nicht rotierenden Element (9) angeordnet sind, das als Spaltring ausgebildet ist.

5. Kreiselpumpe nach einem der Ansprüche 1 bis 4, **dadurch gekennzeichnet, dass** das Element (9,10) mit den Körpern Waben und/oder Zellen zu einer Spaltverlustminderung aufweist.

6. Kreiselpumpe nach einem der Ansprüche 1 bis 5, **dadurch gekennzeichnet, dass** das Element (9, 10) und die darin gelagerten Körper (11) aus dem gleichen Werkstoff ausgebildet sind.

7. Kreiselpumpe nach einem der Ansprüche 1 bis 6, **dadurch gekennzeichnet, dass** das Element (9, 10) und die darin gelagerten Körper (11) ) gemeinsam in einem generativen Verfahren hergestellt sind.

8. Kreiselpumpe nach einem der Ansprüche 1 bis 7, **dadurch gekennzeichnet, dass** die Körper (11) über Stifte (13) miteinander verbunden sind.

9. Kreiselpumpe nach einem der Ansprüche 1 bis 8, **dadurch gekennzeichnet, dass** die Körper (11) das Element (9, 10) zu einer Innenseite und/oder einer Außenseite stützend lagern.

10. Verfahren zur Herstellung eines Elements (9, 10) für eine Anordnung (6) zur Abdichtung in einer Kreiselpumpe gemäß Anspruch 1 mit mindestens folgenden Schritten:
- Aufbringen einer Schicht eines Aufbaumaterials auf eine Unterlage,
- Einwirken einer Strahlung auf die Schicht,
- Erzeugung einer Struktur (12) mit beweglich gelagerten Körpern (11), die in der Struktur (12) formschlüssig eingebettet sind.

## Claims

1. Centrifugal pump having an arrangement (6) for sealing, wherein a gap (S) is formed between a rotating element (10) and a non-rotating element (9), wherein at least one element (9, 10) has bodies (11) which are movably mounted, wherein the bodies (11) are arranged on the gap side, wherein the bodies (11) have a curved surface for rolling, wherein, in the case of a gap reduction, as can occur for example during start-up or run-down of a centrifugal pump, wear of the elements (9, 10) can be prevented by way of a rolling movement of the bodies (11), **characterized in that** the bodies (11) are embedded in a form-fitting manner in a structure (12), wherein the structure forms cavities such that the bodies (11) are surrounded in a form-fitting manner in the cavities and at the same time a part of the bodies (11) protrudes into the gap (S) and thereby allows a rolling movement of the bodies.

2. Centrifugal pump according to Claim 1, **characterized in that** the bodies (11) are in the form of balls.

3. Centrifugal pump according to Claim 1, **characterized in that** the bodies (11) have a cylindrical portion.

4. Centrifugal pump according to one of Claims 1 to 3, **characterized in that** the bodies (11) are arranged on the non-rotating element (9), which is in the form of a wear ring.

5. Centrifugal pump according to one of Claims 1 to 4, **characterized in that** the element (9, 10) having the bodies has honeycombs and/or cells for gap loss reduction.

6. Centrifugal pump according to one of Claims 1 to 5, **characterized in that** the element (9, 10) and the bodies (11) mounted therein are formed from the same material.

7. Centrifugal pump according to one of Claims 1 to 6, **characterized in that** the element (9, 10) and the bodies (11) mounted therein are produced jointly in a generative process.

8. Centrifugal pump according to one of Claims 1 to 7, **characterized in that** the bodies (11) are connected to one another via pins (13).

9. Centrifugal pump according to one of Claims 1 to 8, **characterized in that** the element (9, 10) is mounted with supporting action with respect to an inner side and/or an outer side by the bodies (11).

10. Method for producing an element (9, 10) for an arrangement (6) for sealing in a centrifugal pump according to Claim 1, comprising at least the following steps:
- applying a layer of a build-up material on a base,
- exposing the layer to radiation,
- producing a structure (12) having movably mounted bodies (11) which are embedded in a form-fitting manner in the structure (12).

## Revendications

1. Pompe centrifuge comprenant un ensemble (6) d'étanchéité, un intervalle (S) étant formé entre un élément rotatif (10) et un élément non rotatif (9), au moins un élément (9, 10) comportant des corps (11) qui sont montés de manière mobile, les corps (11) étant disposés du côté de l'intervalle, les corps (11) comportant une surface d'enveloppe destinée au roulement, un signe d'usure des éléments (9, 10) dû à un mouvement de roulement des corps (11) pouvant être évité dans le cas d'un rétrécissement de l'intervalle, comme cela peut se produire par exemple lors du démarrage ou de l'arrêt d'une pompe centrifuge, **caractérisée en ce que** les corps (11) sont incorporés par complémentarité de formes dans une structure (12), la structure formant des cavités de sorte que les corps (11) soient englobés par complémentarité de formes dans les cavités et en même temps qu'une partie des corps (11) fasse saillie dans l'intervalle (S), permettant ainsi un mouvement de roulement des corps.

2. Pompe centrifuge selon la revendication 1, **caractérisée en ce que** les corps (11) sont conçus sous la forme de billes.

3. Pompe centrifuge selon la revendication 1, **caractérisée en ce que** les corps (11) comportent une portion cylindrique.

4. Pompe centrifuge selon l'une des revendications 1 à 3, **caractérisée en ce que** les corps (11) sont disposés sur l'élément non rotatif (9) qui est conçu sous la forme d'une bague fendue.

5. Pompe centrifuge selon l'une des revendications 1 à 4, **caractérisée en ce que** l'élément (9, 10) pourvu des corps comporte des nids d'abeilles et/ou des alvéoles destinés à réduire les pertes d'intervalle.

6. Pompe centrifuge selon l'une des revendications 1 à 5, **caractérisée en ce que** l'élément (9, 10) et les corps (11) montés à l'intérieur sont en le même matériau.

7. Pompe centrifuge selon l'une des revendications 1 à 6, **caractérisée en ce que** l'élément (9, 10) et les corps (11) montés à l'intérieur sont fabriqués conjointement dans un procédé génératif.

8. Pompe centrifuge selon l'une des revendications 1 à 7, **caractérisée en ce que** les corps (11) sont reliés entre eux par des tiges (13).

9. Pompe centrifuge selon l'une des revendications 1 à 8, **caractérisée en ce que** les corps (11) logent l'élément (9, 10) en appui sur un côté intérieur et/ou un côté extérieur.

10. Procédé de fabrication d'un élément (9, 10) destiné à un ensemble (6) d'étanchéité d'une pompe centrifuge selon la revendication 1, ledit procédé comportant au moins les étapes suivantes :
- appliquer une couche d'un matériau de construction sur un substrat,
- appliquer un rayonnement sur la couche,
- générer une structure (12) comportant des corps (11) montés de manière mobile qui sont incorporés dans la structure (12) par complémentarité de formes.
